# EUROPEAN PATENT APPLICATION

(11) **EP 4 381 949 A1**
(43) Date of publication of application: **12.06.2024**
(21) Application number: 22868633.3
(22) Date of filing: 15.04.2022
(51) Int. Cl.: A21D 2/08, A21D 2/18, A21D 8/04, A21D 2/22, A21D 6/00

(54) **COMPOSITION FOR RAPID PRODUCTION OF BREAD AND APPLICATION OF COMPOSITION**

(30) Priority: 14.09.2021 CN 202111073541
(71) Applicant: Angel Yeast Co., Ltd., Hubei 443003 (CN)
(72) Inventor: XIAO, Minghua, Yichang, Hubei 443003 (CN); XU, Yunfeng, Yichang, Hubei 443003 (CN); HU, Xinping, Yichang, Hubei 443003 (CN); SONG, Yibing, Yichang, Hubei 443003 (CN); HUANG, Dongfang, Yichang, Hubei 443003 (CN)
(74) Representative: karo IP
(86) International application number: PCT/CN2022/087129
(87) International publication number: WO 2023/040255

(57) **Abstract**

A composition for rapid production of bread and an application of the composition. The composition for rapid production of bread comprises in percentage by weight: 0.1%-5% of an antioxidant, 5%-40% of an emulsifier, 0.1%-5% of an enzyme preparation, 5%-40% of a thickener, and 10%-89.8% of a filler. The composition can be applied to a conventional bread making process and a bread making process using frozen dough. When the composition is applied to the conventional bread making process, a leavening step can be shortened or not carried out, and when the composition is applied to the frozen dough process, unfreezing and leavening steps can be omitted, and the frozen dough can be directly baked without unfreezing and leavening; the bread making process is simplified, time is saved, bread can be easily and quickly made, the management and technical difficulty of the industry is reduced, and the obtained product has no differences from that made by the conventional process in appearance, volume, texture, taste, etc.

## Description

### Technical Field

The present invention relates to the field of food products, more particularly, it relates to a composition for rapid production of bread.

### Background Art

Bread is a kind of convenient food which is popular. In recent years, the baking industry in China has developed rapidly and the market demand is increasing. In order to meet the market demand, more and more enterprises are beginning to adopt a method for the rapid production of bread, for example, using a frozen dough process to produce bread, so that a production link and a consumption link are separated and fresh bread is rapidly provided.

The proportion of crisping dough in the frozen dough is becoming higher and higher. There are currently two ways for the frozen crisping dough process, one is pre-forming and the other is pre-leavening. Whatever process requires special leavening equipment and a leavening time of about 2 h, which takes a long time and requires high management and technical requirements.

### Summary of the Invention

In the traditional bread making process, it is generally required to go through a fermentation process for about 2 h. In the fermentation process, yeast converts the sugars in dough into alcohol and CO₂, so that the volume of dough is increased to 2-3 times the original, and the enrichment of alcohol, acid, aldehyde, esters, and other metabolites in dough increases the flavor of bread. Accordingly, in a frozen dough process, where the yeast is in a dormant state after the dough is frozen, the dough needs to be warmed up, the yeast is recovered, and then in fermentation activity, the process generally needs to go through about 3-8 h depending on the thawing temperature, and these processes are fatal defects for a store needing to provide fresh bread in time. The pre-packaged bread produced in advance cannot meet the demand for fresh consumption. Shortening the bread fermentation time is the most direct way to produce bread quickly, since the time for dough preparation, baking to cooking is generally fixed and cannot be changed, frozen dough process can save the dough preparation time and process, but thawing and fermentation instead increase the time. The leavening process can be completed quickly by providing a nutritional source of yeast so that the yeast can move quickly while adjusting the physical state of the dough so that it can expand more easily. In the frozen dough process, especially the crisping frozen dough, maintaining a good and stable dough structure during the cryopreservation process is important for the increase of the volume of bread and the maintenance of the volume.

In view of the problems such as long fermentation time in bread production, long thawing time, and leavening time in the frozen dough process, the present invention provides a composition for the rapid production of bread.

In a first aspect, the present invention provides a composition for rapid production of bread comprising in percentage by weight: 0.1%-5% of an antioxidant, 5%-40% of an emulsifier, 0.1%-5% of an enzyme preparation, 5%-40% of a thickener, and 10%-89.8% of a filler.

Preferably, the composition comprises, in percentage by weight, 4.5%-5% of the antioxidant, 35%-40% of the emulsifier, 3%-5% of the enzyme preparation, 15%-40% of the thickener, and 10.5%-42% of the filler.

Preferably, the antioxidant is selected from one or a combination of two or more of potassium bromate, azodicarbonamide, and ascorbic acid, preferably ascorbic acid.

Preferably, the emulsifier is one or a combination of two or more of diacetyl tartaric acid ester of mono(di)glycerides, mono- and diglycerol fatty acid esters, calcium stearoyl lactylate, sodium stearoyl lactylate, propylene glycol alginate, phospholipids, and sucrose fatty acid esters.

Preferably, the emulsifier contains mono- and diglycerol fatty acid esters and diacetyl tartaric acid ester of mono(di)glycerides;
further preferably, the emulsifier contains 1-20 mass% parts of mono- and diglycerol fatty acid esters and 4-20% of diacetyl tartaric acid ester of mono(di)glycerides.

Preferably, the mono- and diglycerol fatty acid esters are formed by esterification of saturated or unsaturated fatty acids with one or two hydroxyl groups of glycerol;
preferably, the fatty acid is selected from one or a combination of two or more of oleic acid, linoleic acid, linolenic acid, palmitic acid, behenic acid, stearic acid, and lauric acid.

Preferably, the enzyme preparation is derived from one or a combination of two or more of microorganisms, and plants, further preferably, the microbial source comprises a bacterial-type source and/or a fungal-type source.

Preferably, the enzyme preparation is one or a combination of two or more of amylase, xylanase, cellulase, glucose oxidase, lipase, and protease;
preferably, the amylase is an endo-amylase and/or an exo-amylase. Preferably, the amylase acts on straight or branched chains and the product comprises mono-, di-and polysaccharides.
preferably, the amylase is a combination of α-amylase, xylanase, cellulase, and glucose oxidase,
preferably, the combination comprises 0.4-2.0 mass% of α-amylase, 0.5-2 mass% of xylanase, 0.5-0.8 mass% of cellulase and 0.05-0.7 mass% of glucose oxidase;
preferably, the α-amylase has an enzymatic activity of 3,500-4,500 FAU-F/g;
or, preferably, the xylanase has an enzymatic activity of 2,000-3,000 FXU-W/g;
or, preferably, the lipase has an enzymatic activity of 6.8-7.5 KLU/g;
or, preferably, the glucose oxidase has an enzyme activity of 8,500-11,500 GODU/g;
or, preferably, the protease has an enzymatic activity of 400-600 LAPU/g;
or, preferably, the maltogenic amylase has an enzymatic activity of 8,500-11,500 MANU/g.

Preferably, the thickener comprises one or a combination of two or more of xanthan gum, guar gum, carrageenan, sodium carboxymethyl cellulose, sodium polyacrylate, sodium alginate, propylene glycol alginate.

Preferably the thickener is a combination of xanthan gum, guar gum, and propylene glycol alginate;
further preferably, the thickener contains 3-10 mass% of xanthan gum, 3-10 mass% of guar gum, and 7-20 mass% of propylene glycol alginate.

Preferably, the emulsifier contained in the composition contains 1-20 mass% of mono- and diglycerol fatty acid esters and 4-20% of diacetyl tartaric acid ester of mono(di)glycerides;
the enzyme preparation comprises 0.4-2.0 mass% of α-amylase, 0.5-2 mass% of xylanase, 0.5-0.8 mass% of cellulase and 0.05-0.7 mass% of glucose oxidase;
the thickener contains 3-10 mass% of xanthan gum, 3-10 mass% of guar gum, and 7-20 mass% of propylene glycol alginate.

Preferably, the filler is selected from one or a combination of two or more of starches, soya flours, and inorganic salts,
preferably, the starch is corn starch,
preferably, the soybean meal is soybean meal,
preferably, the inorganic salt is one or a combination of two or more of calcium carbonate and calcium sulfate.

In a second aspect, the present invention provides an application of the composition for making bread.

Preferably, the bread is crisping bread having butter-in-dough layers subjected to a butter-in-dough crisping process.

Preferably, the bread contains, in percentage by mass, 0.5-2 wt% of the composition.

The composition of the present invention can be applied to a conventional bread making process and a bread making process using frozen dough. When the composition is applied to the conventional bread making process, a leavening step can be shortened or not carried out, and when the composition is applied to the frozen dough process, unfreezing and leavening steps can be omitted, and the frozen dough can be directly baked without unfreezing and leavening; the bread making process is simplified, time is saved, bread can be easily and quickly made, the management and technical difficulty of the industry is reduced, and the obtained product has no differences from that made by the conventional process in appearance, volume, texture, taste, etc.

### Brief Description of the Drawings

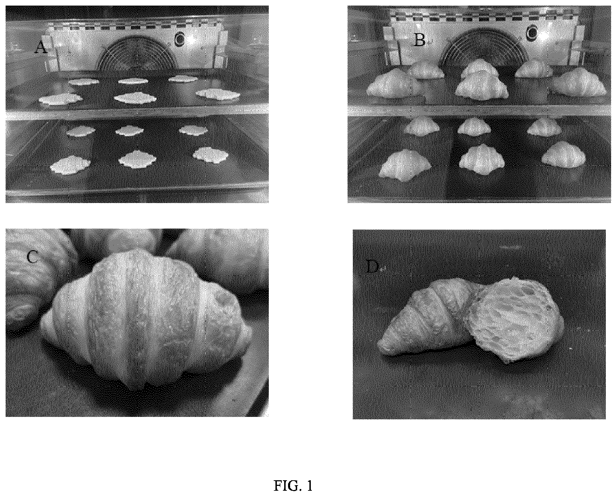

FIG. 1 shows bread prepared in Example 5 group in Example 9, wherein,
FIG. 1A shows that dough after cryopreservation is placed directly into an oven for baking;
FIG. 1B shows the obtained bread after baking;
FIG. 1C is an enlarged view of the obtained bread;
FIG. 1D is a cross-section view of the obtained bread.

### Detailed Description of the Invention

The present invention provides a composition for rapid production of bread.

The experimental materials and instrumental information used in the examples of the present invention are shown in Table 1:

**Table 1 Experimental materials and manufacturers**

| Reagents | Enzyme activity | Manufacturers |
|---|---|---|
| Vitamin C | | CSPC PHAMRA. |
| Mono- and diglycerol fatty acid esters | The monoester content is 90%, the diester content is 9%, the free glycerol is 1%, and the fatty acid is palmitic acid | Henan Zhengtong Food Technology Co., Ltd. |
| Sodium stearoyl lactylate | | Henan Zhengtong Food Technology Co., Ltd. |
| Diacetyl tartaric acid ester of mono(di)glycerides | Acid value (in KOH)/(mg/g) 62-90; saponification value (in KOH)/(mg/g) 380-505 | Southern New Well Bioengineering Co., Ltd. |
| α-amylase | 3,800 FAU-F/g | Novozymes China Biotechnology Co., Ltd. |
| Xylanase | 2,500 FXU-W/g | Novozymes China Biotechnology Co., Ltd. |
| Cellulase | 4,500-5,500 U/g | DSM China |
| | | Biotechnology Co., Ltd. |
| Lipase | 7 KLU/g | Novozymes China Biotechnology Co., Ltd. |
| Protease | 500 LAPU/g | Novozymes China Biotechnology Co., Ltd. |
| Xanthan gum | | Shandong Zhongxuan |
| Guar gum | | M/s. Sarda Gums & Chemicals |
| Propylene glycol alginate | | Qingdao Bright Moon Seaweed Group Co., Ltd. |
| Corn starch | | Liaoning Dongyuan Pharmaceutical Co., Ltd. |
| Oven | econo | MIWE, Germany |

### Examples 1 to 7

The raw materials of Examples 1 to 7 were weighed according to the mass of each component shown in Table 2 below, and the weighed raw materials were mixed uniformly to obtain the compositions of Examples 1 to 7.

**Table 2**

| | | Exa mple 1 (g) | Exa mple 2 (g) | Exa mple 3 (g) | Exa mple 4 (g) | Exa mple 5 (g) | Exa mple 6 (g) | Exa mple 7 (g) |
|---|---|---|---|---|---|---|---|---|
| Antiox idant | Vitamin C | 5 | 10 | 50 | 1 | 45 | 50 | 45 |
| Emulsi fier | Mono- and diglycerol fatty acid esters | 100 | 200 | 10 | 200 | 160 | 195 | 200 |
| | Diacetyl tartaric acid ester of mono(di)glycerides | 150 | 100 | 40 | 200 | 200 | 200 | 180 |
| Enzym e prepara tion | α-amylase | 4 | 8 | 1 | 35 | 10 | 15 | 20 |
| | Xylanase | 5 | 6 | | | 12 | 20 | 11 |
| | Cellulase | 3 | 4 | | 15 | 6 | 8 | 5 |
| | Glucose oxidase | 0.5 | 1 | | | 4 | 7 | 4 |
| Thicke ner | Xanthan gum | 30 | 50 | 50 | 300 | 100 | 100 | 30 |
| | Guar gum | 30 | 50 | | 100 | 100 | 100 | 50 |
| | Propylene glycol alginate | 100 | 150 | | | 100 | 200 | 70 |
| Fillers | Corn starch | 572.5 | 421 | 849 | 149 | 263 | 105 | 385 |
| Total | | 1,000 | 1,000 | 1,000 | 1,000 | 1,000 | 1,000 | 1,000 |

### Comparative Examples 1 to 4

The raw materials of Comparative Examples 1 to 4 were weighed according to the mass of each component shown in Table 3 below, and the weighed raw materials were mixed uniformly to obtain the compositions of Comparative Examples 1 to 4.

**Table 3**

| | | Comparativ e Example 1 (g) | Comparativ e Example 2 (g) | Comparativ e Example 3 (g) | Comparativ e Example 4(g) |
|---|---|---|---|---|---|
| Antioxidant | Vitamin C | 0 | 10 | 60 | 0.5 |
| Emulsifier | Mono- and diglycerol fatty acid esters | 100 | 10 | 300 | 10 |
| | Diacetyl tartaric acid ester of mono(di)glycerides | 150 | 5 | 200 | 30 |
| Enzyme preparation | α-amylase | 4 | 8 | 22 | 0.2 |
| | Xylanase | 5 | 6 | 20 | 0.1 |
| | Cellulase | 3 | 4 | 11 | 0.1 |
| | Glucose oxidase | 0.5 | 1 | 7 | 0.1 |
| Thickener | Xanthan gum | 30 | 50 | 40 | 500 |
| | Guar gum | 30 | 50 | | |
| | Propylene glycol | 0 | 150 | | |
| | alginate | | | | |
| Fillers | Corn starch | 677.5 | 706 | 340 | 459 |
| Total | | 1,000 | 1,000 | 1,000 | 1,000 |

### Example 8

This example demonstrates the benefits provided by the compositions of the present invention by testing the properties of the compositions provided by Examples 1 to 7 and Comparative Examples 1 to 4 according to the frozen dough process for crisping bread.

The crisping bread ingredients of Examples 1 to 7 and Comparative Examples 1 to 4 were prepared by weighing raw materials according to the formulation in Table 4 below. The ingredients of each group differed only in the formulation of the composition. The compositions used in the breads of Examples 1 to 7 and Comparative Examples 1 to 4 correspond to the formulations of the compositions provided in Examples 1 to 7 and Comparative Examples 1 to 4.

**Table 4 Dough formulation for crisping bread**

| Raw material name | Weight (g) |
|---|---|
| Bread flour | 1,000 |
| Fresh yeast | 50 |
| Fine granulated sugar | 100 |
| Composition | 10 |
| Common salt | 16 |
| Butter (for dough) | 50 |
| Milk powder | 40 |
| Water | 560 |
| Sheet butter (for wrapping) | 500 |

Breads in Examples 1 to 7 and Comparative Examples 1 to 4 were prepared as follows:
(1) Preparation of raw materials and excipients: the required raw materials were weighed according to the formulation of the dough.
(2) Dough agitation: bread flour, fine granulated sugar, common salt, milk powder, and the compositions provided in Examples 1 to 7 and Comparative Examples 1 to 4 of the present invention were mixed and stirred until uniform, then water was added, slowly stirred until clumping was completed, then fresh yeast was added and rapidly stirred until the dough was smooth, and then butter was added and stirred until the gluten was sufficiently expanded.
(3) Dough relaxing: the dough was rolled out, sealed, and placed in a freezer at -18°C to relax for 30 min.
(4) Butter wrapping for crisping: the dough was expanded to the appropriate size using a crisping machine, wrapped with sheet butter, and crisping in 4 folds twice to a final dough thickness of 0.3-0.4 cm.
(5) Dividing: the dough was divided into triangles with a base of 10 cm * height of 20 cm, the dough weighed 40 g, rolled up, and flattened on a crisping machine to a thickness of about 1 cm.
(6) Rapid freezing and cooling: the dough was fed to a -35°C quick freezer for very rapid freezing for about 1 h.
(7) Cryopreservation: the dough was sealed and stored in a -18°C freezer for 24 h.
(8) Taking out dough for baking: the oven baking procedure is set up with the parameters shown in Table 5 below. The frozen dough obtained in step (7) was taken out of the -18°C freezer and directly baked in an oven.

**Table 5**

| Step | Temperature (°C) | Time (min) | Amount of steam (mL) | Airspeed (RPM) | Exhaust air |
|---|---|---|---|---|---|
| 1 | 140 | 7 | 100 | 1,410 | |
| 2 | 160 | 5 | 60 | 1,600 | |
| 3 | 170 | 4 | 40 | 1,600 | |
| 4 | 180 | 5 | 0 | 1,600 | Exhaust air |

The specific volume of specific volume of each group of bread was measured using a volume-measuring instrument, and the results are shown in Table 6.

**Table 6**

| Experiment groups | The specific volume of crisping bread (cm³/g) |
|---|---|
| Example 1 Group | 5 |
| Example 2 Group | 5.4 |
| Example 3 Group | 5 |
| Example 4 Group | 5.1 |
| Example 5 Group | 6.5 |
| Example 6 Group | 6 |
| Example 7 Group | 6.2 |
| Comparative Example 1 Group | 3 |
| Comparative Example 2 Group | 3.5 |
| Comparative Example 3 Group | 4 |
| Comparative Example 4 Group | 3.2 |

As shown in Table 6, when the composition of the present invention is applied to the frozen dough process of bread, the volume of bread can be significantly increased, and the specific volume of bread obtained from the dough taken out from the refrigerator without fermentation and directly baked is 5-6.5 cm³/g.

### Example 9

Four portions of dough stock were prepared with the crisping bread formulation shown in Table 4 above, with one portion having 10 g of the composition of Example 5 added thereto, designated as Example 5 group, and the other three portions having no composition added thereto, designated as Control 1 group, Control 2 group, and Control 3 group. Four portions of dough were subjected to steps (1) - (5) according to the bread making process described in Example 8 above to obtain a split dough.

The doughs from Example 5 group, Control 1 group, and Control 2 group were subjected to step (6) of rapid freezing and step (7) of cryopreservation, and then the doughs from Example 5 and Control 1 groups were directly baked, with the baking procedure shown in Table 5. The doughs of Control 2 were thawed at room temperature for 1 h and leavened for 2 h before baking according to the baking schedule shown in Table 5.

The divided and shaped doughs in Control 3 group were leavened for 2 h and then baked according to the baking schedule shown in Table 5.

The specific volume of bread obtained from each set of doughs was measured using a volume measuring instrument and the results are shown in Table 6 below.

**Table 6**

| Experiment groups | The specific volume of crisping bread (cm³/g) |
|---|---|
| Example 5 | 6.5 |
| Control 1 group | 3 |
| Control 2 group | 6.2 |
| Control 3 group | 6.5 |

Results are as shown in Table 6 above, the specific volume of bread baked directly after cryopreservation from the dough prepared with the composition provided herein (Example 5 group) was the same as that of freshly prepared dough (Control 3 group). However, in Control 1 group, the dough prepared without the composition provided in the present invention was directly baked after the steps of rapid freezing, cooling, and cryopreservation, and the specific volume of the resulting bread was 3. The dough of Control 2 group was thawed for 1 h after rapid freezing and cryopreservation, and then baked after 2 h of leavening, the specific volume of bread obtained in Control 2 group was basically the same as that of Control 3 group.

FIG. 1 shows bread prepared according to Example group 5, wherein, FIG. 1A shows that a dough after cryopreservation is placed directly into an oven for baking; FIG. 1B shows the obtained bread after baking; FIG. 1C is an enlarged view of the obtained bread; FIG. 1D is a cross-section view of the obtained bread. As shown in FIG. 1, when the dough is directly baked in an oven in a frozen state, it can rapidly rise in a short period of time, and the final appearance, volume, and texture of the dough can reach the conventional effect that the bread is thawed and leavened and then baked.

In view of the above, the present invention provides a composition capable of significantly reducing the time for preparing bread from frozen dough and has an excellent technical effect.

## Claims

1. A composition for rapid production of bread, **characterized by** comprising, in percentage by weight, 0.1%-5% of an antioxidant, 5%-40% of an emulsifier, 0.1%-5% of an enzyme preparation, 5%-40% of a thickener, and 10%-89.8% of a filler.

2. The composition according to claim 1, **characterized by** comprising, in percentage by weight, 4.5%-5% of the antioxidant, 35%-40% of the emulsifier, 3%-5% of the enzyme preparation, 15%-40% of the thickener, and 10.5%-42% of the filler.

3. The composition according to claim 1 or 2, **characterized in that** the antioxidant is selected from one or a combination of two or more of potassium bromate, azodicarbonamide, and ascorbic acid, preferably ascorbic acid.

4. The composition according to any one of claims 1 to 3, **characterized in that** the emulsifier is one or a combination of two or more of diacetyl tartaric acid ester of mono(di)glycerides, mono- and diglycerol fatty acid esters, calcium stearoyl lactylate, sodium stearoyl lactylate, propylene glycol alginate, phospholipids, and sucrose fatty acid esters;
preferably, the emulsifier contains mono- and diglycerol fatty acid esters and diacetyl tartaric acid ester of mono(di)glycerides;
further preferably, the emulsifier contains 1-20 mass% parts of mono- and diglycerol fatty acid esters and 4-20% of diacetyl tartaric acid ester of mono(di)glycerides.

5. The composition according to any one of claims 1 to 4, **characterized in that** the mono- and diglycerol fatty acid esters are formed by esterification of saturated or unsaturated fatty acids with one or two hydroxyl groups of glycerol;
preferably, the fatty acid is selected from one or a combination of two or more of oleic acid, linoleic acid, linolenic acid, palmitic acid, behenic acid, stearic acid, and lauric acid.

6. The composition according to any one of claims 1 to 5, **characterized in that** the enzyme preparation is one or a combination of two or more of amylase, xylanase, cellulase, glucose oxidase, lipase, and protease,
preferably, the enzyme preparation is a combination of α-amylase, xylanase, cellulase, and glucose oxidase,
preferably, the combination comprises 0.4-2.0 mass% of α-amylase, 0.5-2 mass% of xylanase, 0.5-0.8 mass% of cellulase and 0.05-0.7 mass% of glucose oxidase;
preferably, the α-amylase has an enzymatic activity of 3,500-4,500 FAU-F/g;
or, preferably, the xylanase has an enzymatic activity of 2,000-3,000 FXU-W/g;
or, preferably, the lipase has an enzymatic activity of 6.8-7.5 KLU/g;
or, preferably, the glucose oxidase has an enzyme activity of 8,500-11,500 GODU/g;
or, preferably, the protease has an enzymatic activity of 400-600 LAPU/g;
or, preferably, the maltogenic amylase has an enzymatic activity of 8,500-11,500 MANU/g.

7. The composition according to any one of claims 1 to 6, **characterized in that** the thickener comprises one or a combination of two or more of xanthan gum, guar gum, carrageenan, sodium carboxymethyl cellulose, sodium polyacrylate, sodium alginate, and propylene glycol alginate;
preferably, the thickener is a combination of xanthan gum, guar gum, and propylene glycol alginate;
further preferably, the thickener contains 3-10 mass% of xanthan gum, 3-10 mass% of guar gum, and 7-20 mass% of propylene glycol alginate.

8. The composition according to any one of claims 1 to 7, **characterized in that**
the emulsifier contains 1-20 mass% parts of mono- and diglycerol fatty acid esters and 4-20% of diacetyl tartaric acid ester of mono(di)glycerides;
the enzyme preparation comprises 0.4-2.0 mass% of α-amylase, 0.5-2 mass% of xylanase, 0.5-0.8 mass% of cellulase and 0.05-0.7 mass% of glucose oxidase;
the thickener contains 3-10 mass% of xanthan gum, 3-10 mass% of guar gum, and 7-20 mass% of propylene glycol alginate.

9. The composition according to any one of claims 1 to 8, **characterized in that** the filler is selected from one or a combination of two or more of starches, soya flours, and inorganic salts,
preferably, the starch is corn starch,
preferably, the soybean meal is soybean meal,
preferably, the inorganic salt is one or a combination of two or more of calcium carbonate and calcium sulfate.

10. Use of the composition of any one of claims 1 to 9 in making bread.

11. The use according to claim 10, **characterized in that** the bread is crisping bread having butter-in-dough layers subjected to a butter-in-dough crisping process.

12. The use according to claim 10 or 11, **characterized in that** the bread contains, in percentage by mass, 0.5-2 wt% of the composition.
